Europäisches Patentamt

European Patent Office

Office européen des brevets

(19)

(11) EP 1 594 020 A1

(12) **EUROPÄISCHE PATENTANMELDUNG**

(43) Veröffentlichungstag:
 09.11.2005 Patentblatt 2005/45

(51) Int Cl.$^7$: **G04F 5/14**, G02F 1/35

(21) Anmeldenummer: 05009406.9

(22) Anmeldetag: 29.04.2005

(84) Benannte Vertragsstaaten:
 **AT BE BG CH CY CZ DE DK EE ES FI FR GB GR HU IE IS IT LI LT LU MC NL PL PT RO SE SI SK TR**
 Benannte Erstreckungsstaaten:
 **AL BA HR LV MK YU**

(30) Priorität: **03.05.2004 DE 102004022037**

(71) Anmelder: **Bundesrepublik Deutschland, vertr. durch d.
 Bundesministerium f. Wirtschaft und Arbeit,
 38116 Braunschweig (DE)**

(72) Erfinder: **Telle, Harald, Dr.
 38518 Gifhorn (DE)**

(74) Vertreter: **Lins, Edgar et al
 Gramm, Lins & Partner GbR,
 Theodor-Heuss-Strasse 1
 38122 Braunschweig (DE)**

(54) **Verfahren zum Erzeugen eines offsetfreien optischen Frequenzkamms und Lasereinrichtung hierfür**

(57) Es wird ein Verfahren zum Erzeugen eines Frequenzspektrums in Form eines Frequenzkamms offenbart, bei dem kurze Lichtpulse erzeugt werden, die jeweils ein aus Spektrallinien entsprechend einer Vielzahl longitudinaler Moden einer Lasereinrichtung zusammengesetztes Frequenzspektrum in Form eines Frequenzkamms mit zueinander äquidistanten Spektrallinien aufweisen und bei dem eine Frequenzdifferenzbildung derart durchgeführt wird, dass Spektrallinien niedrigerer Frequenzen von Spektrallinien höherer Frequenzen abgezogen werden, sodass ein Frequenzkamm mit offset-freien Frequenzen erzeugt wird, deren Frequenzen jeweils einem ganzzahligen Vielfachen der Repetitionsfrequenz des Frequenzkamms entsprechen. Erfindungsgemäß weisen die Spektrallinien höherer Frequenzen zu den Spektrallinien niedrigerer Frequenzen einen Frequenzabstand auf, der mindestens einer Oktave entspricht, sodass das Frequenzspektrum des Frequenzkamms mit offset-freien Spektrallinien innerhalb des Frequenzspektrums des Frequenzkamms vor der Frequenzdifferenzbildung liegt. Ferner werden eine Lasereinrichtung zur Durchführung des erfindungsgemäßen Verfahrens sowie Verwendungsbeispiele offenbart.

Fig. 1

**Beschreibung**

Die Erfindung betrifft ein Verfahren zum Erzeugen eines Frequenzspektrums in Form eines Frequenzkamms, bei dem kurze Lichtpulse erzeugt werden, die jeweils ein aus Spektrallinien entsprechend einer Vielzahl longitudinaler Moden einer Lasereinrichtung zusammengesetztes Frequenzspektrum in Form eines Frequenzkamms mit zueinander äquidistanten Spektrallinien aufweisen, und bei dem eine Frequenzdifferenzbildung derart durchgeführt wird, dass Spektrallinien niedrigerer Frequenzen von Spektrallinien höherer Frequenzen abgezogen werden, sodass ein Frequenzkamm mit offset-freien Spektrallinien erzeugt wird, deren Frequenzen jeweils einem ganzzahligen Vielfachen der Repetitionsfrequenz des Frequenzkamms entsprechen, sowie eine Lasereinrichtung zur Durchführung des Verfahrens.

Seit einigen Jahren ist die Erzeugung ultrakurzer Laser-Lichtpulse, d. h. Lichtpulse mit charakteristischen Pulsdauern im ns- bis fs-Bereich, bekannt. Femtosekunden-Lichtpulse lassen sich durch phasenstarre Kopplung der longitudinalen

Moden eines Laserresonators erzeugen. Durch die auch Modensynchronisation genannten Kopplung können in dem Laserresonator sehr viele eigene Schwingungen bzw. Moden mit verschiedenen Frequenzen angeregt werden, wenn die Bandbreite des Laserübergangs genügend breit ist. Wird durch einen geeigneten Mechanismus zwischen den Moden eine feste Phasenbeziehung eingestellt, so kommt es zur Abstrahlung kurzer Lichtpulse mit einem zeitlichen Abstand $\Delta t$. Mit breitbandigen Lasermaterialien, beispielsweise Titan:Saphir (Saphir, der mit dreiwertigen Titanionen dotiert ist), können heute Lichtpulse von nur wenigen Femtosekunden Dauer erzeugt werden.

Wird nun der Intensitätsverlauf der pulsförmigen Laserstrahlung vom Zeitraum in den Frequenzraum übertragen, beispielsweise mittels der Fourier-Transformation, ergibt sich ein sogenannter Frequenzkamm, der d-Funktionen ähnliche Spektrallinien aufweist, die den zu jedem Lichtpuls beitragenden optischen Frequenzen entsprechen. Die Einhüllende des Frequenzkamms liegt innerhalb der Bandbreite des Laserübergangs in dem Lasermedium. Die Breite der Einhüllenden ist im Wesentlichen umgekehrt proportional zur Pulsdauer.

Die Frequenzabstände der Spektrallinien des Frequenzkamms sind entsprechend den longitudinalen Lasermoden ganzzahlige Vielfache der Repetitionsfrequenz $f_{rep}$. Die Repetitionsfrequenz $f_{rep}$ ist der reziproke Wert des zeitlichen Abstandes $\Delta t$ der Lichtpulse. Die Kammstruktur von Femtosekunden-Pulsen im Frequenzraum wird beispielsweise in "Colloqium: Femtosecond optical frequency combs" (Reviews of Modern Physics, Vol. 75, Januar 2003, Seite 325ff.) beschrieben.

Es wurde erkannt, dass sich die Aneinanderreihung der äquidistanten Spektrallinien als Skala für eine Frequenzkalibrierung eignet. Gleichzeitig wurde aber auch auf eine ungenügende Stabilität des Pulslasers und auf eine rauschbedingte Verschiebung der Spektralfrequenzen hingewiesen. In dem Artikel "Carrier-envelope offset phase control: A novel concept for absolut optical frequency measurement and ultrashort pulse generation" (Applied Physics, B 69, 1999, Seite 327ff.) wird die Ursache hierfür beschrieben. Die Gruppengeschwindigkeit eines Pulses, die die Umlaufzeit im Resonator und damit die Repetitionsfrequenz $f_{rep}$ bestimmt, stimmt in der Regel nicht mit der Phasengeschwindigkeit der einzelnen Moden überein.

Die durch ganzzahlige Vielfache der Repetitionsfrequenz $f_{rep}$ getrennten Spektrallinien lassen sich in ihrer absoluten Frequenzlage nicht durch ganzzahlige Vielfache der Repetitionsfrequenz $f_{rep}$ darstellen, sondern für jede Kammlinie gilt folgende Formel:

$$f_m = f_{ceo} + m\,f_{rep},$$

bei der der Index "ceo" für carrier-envelope offset steht und m eine natürliche Zahl der Größenordnung $10^5$ bis $10^6$ ist.

Mit der ceo-Frequenz bzw. $f_{ceo}$ wird eine Frequenz bezeichnet, um deren Betrag alle Frequenzen der Spektrallinien des Frequenzkamms relativ zum Ursprung im Frequenzraum verschoben sind. Die Größe der Frequenz $f_{ceo}$ wird dabei durch die Dispersionseigenschaften des Laserresonators bestimmt und ist somit zeitlichen Schwankungen unterworfen. Diese Verschiebung führt dazu, dass die Anwendungen von Pulslasern für Messzwecke oder als Generatoren optischer Frequenzen beschränkt sind.

Durch eine Frequenzdifferenzbildung zweier Frequenzbereiche kann aus einem derartigen Frequenzkamm ein offset-freier Frequenzkamm erzeugt werden (Optical Letters; Vol. 29, No. 3; 01.02.2004). Da die Frequenzen aller Spektrallinien genau einmal den Betrag der ceo-Frequenz $f_{ceo}$ enthalten, fällt diese Größe bei der Frequenzdifferenzbildung heraus und es wird somit ein offset-freier Frequenzkamm erhalten. Die Bandbreite und die Lage des offset-freien Frequenzkamms im Frequenzraum wird allerdings deutlich verschoben und liegt nun außerhalb des ursprünglichen Frequenzbereiches.

Derzeit wird zur Darstellung des Normals für die Zeit eine sogenannte Cäsium-Atomuhr mit einer Grundfrequenz von 9,2 GHz verwendet. Durch direktes Auszählen der Grundschwingungen wird hierbei die Zeit gemessen. Die Genauigkeit der Zeitmessung beträgt etwa $10^{-14}$. Mit optischen Frequenznormalen ist eine relative Genauigkeit im Bereich von $10^{-18}$ erreichbar. Die Frequenznormale weisen allerdings eine optische Frequenzen von 100 THz oder mehr auf, die nicht mehr direkt auszählbar sind. Deshalb werden für eine "optische Uhr" die hohen Frequenzen des Frequenznormals in elektronisch auswertbare niedrige Frequenzen umgesetzt.

Es ist folglich die Aufgabe der vorliegenden Erfindung, eine verbesserte Darstellung eines Normals für die Zeit mit einem optischen Frequenzgenerator zur Erzeugung eines Frequenznormals zu realisieren.

Zur Lösung der Aufgabe ist erfindungsgemäß ein Verfahren der eingangs erwähnten Art dadurch gekennzeichnet, dass die Spektrallinien höherer Frequenzen zu den Spektrallinien niedriger Frequenzen einen Frequenzabstand aufweisen, der mindestens einer Oktave entspricht, sodass das Frequenzspektrum des Frequenzkamms mit offset-freien Spektrallinien innerhalb des Frequenzspektrums des Frequenzkamms vor der Frequenzdifferenzbildung liegt. Der offset-freie Frequenzkamm steht nun für eine Verwendung als Frequenznormal mit einem Frequenzspektrum innerhalb des ursprünglichen Frequenzspektrums zur Verfügung, wenn eine seiner Linien relativ zu einer Normalfrequenz stabilisiert wird, etwa durch Regelung der Resonatorlänge. Alternativ könnte $f_{rep}$ relativ zu einer Mikrowellen-Normalfrequenz stabilisiert werden.

Bei einer vorteilhaften Weiterführung des erfindungsgemäßen Verfahrens entspricht der Frequenzabstand zwischen den Spektrallinien höherer Frequenzen und denen der niedrigen Frequenzen im Wesentlichen zwei Oktaven, sodass das Frequenzspektrum des Frequenzkamms mit offset-freien Spektrallinien in etwa der Mitte des Frequenzspektrums des Frequenzkamms vor der Frequenzdifferenzbildung.

Bei einer bevorzugten Ausführung des erfindungsgemäßen Verfahrens weist der Frequenzkamm vor der Frequenzdifferenzbildung Frequenzen im Bereich von etwa 100 THz bis 400 THz auf. Bevorzugter weist der Frequenzkamm vor der Frequenzdifferenzbildung Frequenzen im Bereich von etwa 150 THz bis 350 THz auf. Die Differenz bei der Differenzfrequenzbildung ergibt dann eine Frequenz von 200 THz, was einer ungefähren Wellenlänge von 1,5 μm entspricht.

Eine vorteilhafte Weiterführung des erfindungsgemäßen Verfahrens sieht vor, dass zur Markierung einer einzelnen Spektrallinie die Lasereinrichtung mit einer zusätzlichen Lasereinrichtung gekoppelt wird, und die jeweiligen Repetitionsfrequenzen zueinander verschieden sind, beispielsweise aufgrund einer Verstimmung der zusätzlichen Lasereinrichtung um etwa $10^{-10}$. Das abgeschwächte Signal der zusätzlichen Lasereinrichtung wird mit dem Signal der (Steuer-) Lasereinrichtung zusammengefügt. Folglich erhält jede Spektrallinie des Frequenzkamms eine Satellitenlinie, deren Frequenzabstand eindeutig die Spektrallinie charakterisiert bzw. markiert. Diese entstehende Schwebung kann leicht in Abhängigkeit von dem jeweiligen Spektralbereich mit einer Photodiode oder einem Photomultiplier gemessen werden. Das Phasenrauschen der Satellitenlinien relativ zu den Spektrallinien kann bei genügend großer Regelbandbreite prinzipiell sehr klein sein. Das bedeutet, dass auf einer Empfängerseite ein schmalbandiges Mitlauf-Filter zur Phasenverfolgung der charakteristischen Schwebung einsetzbar ist.

Solange die Perioden-Eindeutigkeit gewahrt wird, verkraftet ein derartiger Mitlauf-Filter kurzzeitige Signalunterbrechungen. Somit sind die Satellitenlinien auch alternativ aus der (Steuer-) Lasereinrichtung ableitbar und auf die zusätzliche Lasereinrichtung könnte somit verzichtet werden. Im Zeitbild handelt es sich bei den Frequenzkämmen mit leicht unterschiedlichen Linienabstand um zwei Impulszüge mit leicht unterschiedlichen Impulsabständen. Wenn diese Abstände in einem rationalen Verhältnis zueinander stehen, gibt es eine Zeitspanne, nach dem die relative Impulsposition reproduziert wird - sozusagen ein zeitliches Moire. Diese Situation kann auch mit einer sägezahnförmig modulierten Verzögerungsleitung erreicht werden, bei dem die Modulationsperiodendauer mit dem Zeitmoire synchronisiert wird. Dann steht die langsame Rampe des Sägezahns für die Schwebungsfrequenzmessung des Satelliten, also zur Ordnungszahlbestimmung der Linie, zur Verfügung. Die schnelle Sägezahnrampe zur Rückfahrt wird dabei ausgetastet.

In vorteilhafter Weise wird mit dem erfindungsgemäße Verfahren ein Frequenznormal erzeugt, um optische Frequenzen und/oder Frequenzdifferenzen zu messen, optische Trägerfrequenzen in der Synchronisations-Technik zu erzeugen oder die Frequenz des optischen Frequenznormals zu einer mit elektronischen Mitteln zählbaren Messfrequenz umzusetzen. In der Telekommunikations-Technik ist die Darstellung eines ITU-Standardgrids mit einem Abstand von 50 bis 100 GHz der einzelnen Übertragungskanäle möglich. Durch geeignete Filter, beispielsweise ein Etalon, kann die Information für einen Kanal herausgefiltert werden. Der offset-freie Frequenzkamm ermöglicht als Frequenznormal ferner alle Möglichkeiten in der Metrologie und Spektroskopie.

Bevorzugt werden die Normalfrequenzen in einer Glasfaser übertragen. Insbesondere bei Frequenzen im Bereich von 1,5 μm ist somit eine verlustarme Übertragung möglich.

In vorteilhafter Weise können die zu übertragenden Informationen den offset-freien Frequenzen über Amplituden-Modulationen aufgeprägt werden. Durch die Amplituden-Modulation ist eine Berücksichtigung der Phase der optischen Trägerfrequenzen nicht erforderlich.

Eine erfindungsgemäße Lasereinrichtung weist Mittel zum Erzeugen eines aus Spektrallinien entsprechend einer Vielzahl longitudinaler Moden der Lasereinrichtung zusammengesetztes Frequenzspektrums in Form eines Frequenzkamms mit zueinander äquidistanten Spektrallinien, Mittel zum Aufteilen des Frequenzspektrums der Lichtpulse in zumindest zwei Frequenzbereiche unterschiedlicher Frequenzen, die zueinander einen bestimmten Frequenzabstand aufweisen, und ein nicht-lineares Element für eine Frequenzdifferenzbildung auf, in das Lichtstrahlen mit den entsprechenden Frequenzbereichen überlagert eingestrahlt werden, sodass ein Frequenzkamm mit offset-freien Spektrallinien erzeugt wird, deren Frequenzen jeweils einem ganzzahligen Vielfachen der Repetitionsfrequenz des Frequenzkamms entsprechen und das Frequenzspektrum des Frequenzkamms mit offset-freien Spektrallinien innerhalb des Frequenzspektrums des Frequenzkamms vor der Frequenzdifferenzbildung liegt.

Der Laser erzeugt einen Frequenzkamm, dessen Spektrallinien gegenüber dem Ursprung leicht verschoben sind. Aus diesem Frequenzspektrum werden zwei Bereiche unterschiedlicher Frequenzen durch die Mittel zum Aufteilen herausgeteilt und anschließend einander überlagert. Diese Überlagerung wird in das nicht-lineare Element eingestrahlt und die Frequenzdifferenzbildung führt dazu, dass ein Frequenzkamm aus dem nicht-linearen Element herauskommt, dessen Spektrallinien keine Offsetverschiebung mehr aufweisen. Durch den bestimmten Frequenzabstand liegt der offset-freie Frequenzkamm innerhalb des ursprünglichen Frequenzspektrums.

In einer bevorzugten Ausführungsform der erfindungsgemäßen Lasereinrichtung weisen die Mittel zum Erzeugen des Frequenzkamms einen modengekoppelten Erbium-Faserlaser auf. Dieser Laser erzeugt kurze Lichtpulse von etwa 1560 nm mit einer Repetitionsrate von 59,1 MHz. Die Lichtpulse weisen die Form einer Gaußfunktion auf und haben eine Dauer von etwa 54 Femtosekunden.

Bei einer vorteilhaften Ausführungsform der vorliegenden Erfindung weisen die Mittel zum Erzeugen des Frequenzkamms eine zwischen dem Laser und dem Mittel zum Aufteilen des Frequenzspektrums optisch-nichtlineare Faser auf, in die die Lichtpulse eingestrahlt werden. Die optisch-nichtlineare Faser, beispielsweise eine PCF (photonic crystal fiber) aus SF6, hat die Eigenschaft, das eingestrahlte Frequenzspektrum bzw. den eingestrahlten Frequenzkamm aufgrund ihrer optischen Nicht-Linearität zu verbreitern. Verbreiterung bedeutet in diesem Fall, dass der resultierende, ausgestrahlte Frequenzkamm zusätzliche Spektrallinien aufweist. Dieser verbreiterte Frequenzkamm wird auch mit Superkontinuum bezeichnet. Der Abstand zwischen den einzelnen Spektrallinien bleibt hierbei unverändert. Das Superkontinuum weist Frequenzen in einer Bandbreite im Bereich über zwei Oktaven auf, beispielsweise von etwa 400 nm bis über 1750 nm.

Eine bevorzugte Ausführungsform der erfindungsgemäßen Lasereinrichtung weist als Mittel zum Aufteilen des Frequenzspektrums ein Beugungsgitter auf. Die auf das Beugungsgitter auftreffenden Frequenzen des Frequenzkamms werden entsprechend ihrer Frequenz in unterschiedlichen Winkeln gebeugt. Hierdurch wird das Frequenzspektrum in einzelne Frequenzbereiche aufgeteilt. Alternativ denkbar ist auch eine frequenzabhängige Aufteilung des Lichtpulses durch ein geeignetes Prisma.

Eine vorteilhafte Ausgestaltung der efindungsgemäßen Lasereinrichtung sieht vor, dass eine Spiegelanordnung mehrerer Spiegel zwischen dem Mittel zum Aufteilen des Frequenzspektrums und dem nicht-linearen Element vorgesehen ist, um die Lichtstrahlen erneut zu überlagern. Bevorzugt sind zwischen dem Mittel zum Aufteilen des Frequenzspektrums und der Spiegelanordnung zwei gegeneinander verschiebbare Prismen, beispielsweise aus Kronglas oder aus Quarzglas, angeordnet, durch die der Lichtstrahl mit niedriger Frequenz hindurchläuft. Der durch das Prismenpaar laufende Lichtstrahl wird dabei geeignet verzögert, so dass die beiden Lichtstrahlen zeitlich abgeglichen sind. Alternativ ist denkbar, dass die Zeitverzögerung durch eine geeignete Wegstreckenverlängerung realisiert wird. Dies hätte allerdings den Nachteil, dass für eine andere Auswahl der Frequenzen der Lichtstrahlen jeweils ein neuer Aufbau der Anordnung, insbesondere der Wegstrecke erforderlich ist.

Eine vorteilhafte Ausführungsform der erfindungsgemäßen Lasereinrichtung weist eine Linsenanordnung auf, die die überlagerten Lichtstrahlen fokussiert.

Bevorzugt ist bei einem erfindungsgemäßen Ausführungsbeispiel der Lasereinrichtung ein Erbium-Verstärker vorgesehen, der den Frequenzkamm verstärkt. Nach der geeigneten Verstärkung steht nun ein Frequenzkamm als Frequenznormal für die weitere Verwendung zur Verfügung.

In vorteilhafter Weise kann die erfindungsgemäße Lasereinrichtung verwendet werden, um optische Frequenzen und/oder Frequenzdifferenzen zu messen, optische Trägerfrequenzen in der Synchronisations-Technik zu erzeugen oder die Frequenz des optischen Frequenznormals zu einer mit elektronischen Mitteln zählbaren Messfrequenz umzusetzen. In der Telekommunikations-Technik ist die Darstellung eines ITU-Standardgrids mit einem Abstand von 50 bis 100 GHz der einzelnen Übertragungskanäle möglich. Durch geeignete Filter, beispielsweise ein Etalon, kann die Information für einen Kanal herausgefiltert werden. Der offset-freie Frequenzkamm ermöglicht als Frequenznormal ferner alle Möglichkeiten in der Metrologie und Spektroskopie.

Bevorzugt werden die Normalfrequenzen in einer Glasfaser übertragen. Insbesondere bei Normalfrequenzen im Bereich von 1,5 µm ist somit eine verlustarme Übertragung möglich.

In vorteilhafter Weise können die zu übertragenden Informationen den offset-freien Frequenzen über Amplituden-Modulationen aufgeprägt werden. Durch die Amplituden-Modulation ist eine Berücksichtigung der Phase der optischen Trägerfrequenzen nicht erforderlich.

Nachfolgend wird die vorliegende Erfindung anhand der beigefügten Zeichnungen näher erläutert. Diese zeigen in:

Figur 1     eine schematische Skizze einer erfindungsgemäßen Lasereinrichtung;

Figur 2     Lichtpulse des Erbium-Faserlasers aus Figur 1 im Zeitraum;

Figur 3     die Lichtpulse aus Figur 2 im Frequenzraum;

Figur 4     ein Frequenzkamm des Superkontinuums aus Figur 1;

Figur 5     einen erfindungsgemäßen Frequenzkamm mit Normalfrequenzen.

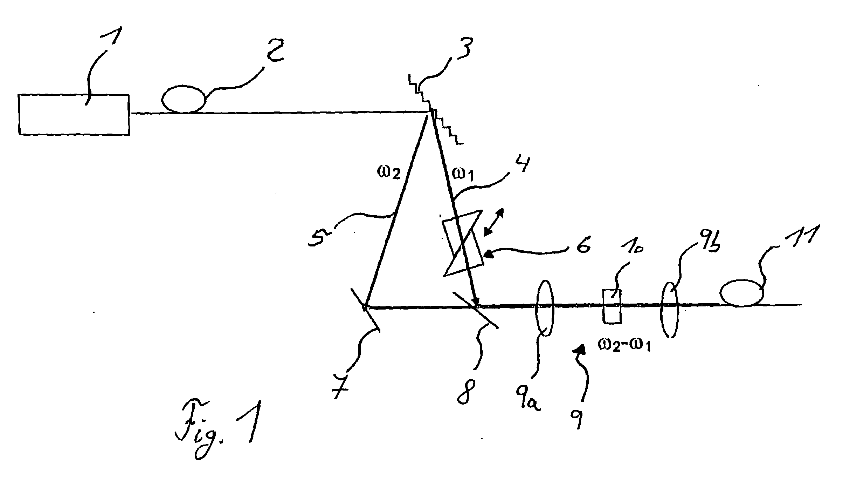

In der Figur 1 ist eine erfindungsgemäße Lasereinrichtung schematisch skizziert. Die Lasereinrichtung weist zur Erzeugung kurzer Lichtpulse einen modengekoppelten Erbium-Faserlaser 1 mit einem Ringresonator (nicht dargestellt) auf. Der Aufbau des Lasers 1 kann in Bezug auf die Wahl des aktiven Lasermediums und weiterer Laserparameter, beispielsweise Pulsdauer, Leistung und spektrale Zusammensetzung modifiziert sein. So ist die erfindungsgemäße Lasereinrichtung nicht auf den Einsatz des Erbium-Faserlasers 1 beschränkt, sondern ist in entsprechender Weise mit anderen Typen von Lasern zur Erzeugung ultrakurzer Lichtpulse, beispielsweise anders dotierte Festkörperlaser, Farbzentrenlaser oder Farbstofflaser, realisierbar. Die Ausführung mit einem kompakten fs-Laser, beispielsweise mit einem Faserlaser oder einem Titan:Saphir-Laser, ist allerdings aufgrund der kompakten Bauweise und des stabilen Betriebs für praktische Anwendungen bevorzugt.

Die erzeugten Lichtpulse werden anschließend in eine optisch-nichtlineare Faser, beispielsweise eine Mikrostruktur-Faser 2, eingekoppelt. Die Mikrostruktur-Faser 2 weist eine Länge von unter einem Meter auf und besitzt als nicht-lineares Medium die besondere Eigenschaft, dass das eingestrahlte Frequenzspektrum durch Selbstphasenmodulation verbreitert wird. Verbreiterung bedeutet in diesem Beispiel, dass der Abstand der Spektrallinien eines eingestrahlten Frequenzkamms bei dem ausgestrahlten Frequenzkamm erhalten bleibt. Das ausgestrahlte Frequenzspektrum weist jedoch zusätzliche Spektrallinien auf, so dass die Bandbreite des erhaltenen Frequenzspektrums bis zu über zwei Oktaven reicht. Je nach der Leistung der Lichtpulse kann eine spektrale Verbreitung bis hin zum Quasi-Weißlichtkontinuum erzielt werden. Dieses verbreiterte Frequenzspektrum wird auch mit Superkontinuum bezeichnet.

Das erzeugte Superkontinuum fällt auf einen Spektralteiler bzw. Mittel 3 zum Aufteilen des Frequenzspektrums, der in dem Beispiel der Figur 1 als Beugungsgitter ausgebildet ist. Das Beugungsgitter teilt den einfallenden Lichtstrahl mit dem vollständigen Frequenzspektrum in mehrere Frequenzbereiche auf. Die mehreren voneinander getrennten Spektralbereiche werden in unterschiedliche Raumrichtungen von dem Beugungsgitter gebeugt. Von den mehreren Spektralbereichen sind in der Figur 1 zwei Spektralbereiche als Lichtstrahlen 4 und 5 mit den zugeordneten Frequenzen ω1 und ω2 dargestellt. In den Raumrichtungen zwischen diesen ausgewählten Lichtstrahlen 4 und 5 liegen weitere Lichtstrahlen mit den zwischen ω1 und ω2 liegenden Frequenzen.

Der Lichtstrahl 4 mit der Frequenz ω1 durchläuft eine Prismenanordnung 6 aus zwei gegeneinander verschiebbaren Prismen. Durch das gegeneinander Verschieben der beiden Prismen wird die Wegstrecke des Teitstrahls 4 verändert, so dass eine Zeitverzögerung für diesen Lichtstrahl mit dem entsprechenden Frequenzanteil eingestellt werden kann.

In der Figur 1 ist ferner eine Spiegelanordnung mit einem ersten Spiegel 7 zur Umlenkung des Lichtstrahls 5 und einem zweiten Spiegel 8 zur Umlenkung des Lichtstrahls 4 dargestellt. Die Spiegel 7 und 8 sind derart ausgerichtet, dass die beiden Lichtstrahlen 4, 5 einander überlagert werden. Damit dies in dem dargestellten Aufbau möglich ist, ist der zweite Spiegel 8 teildurchlässig. Auf die Spiegel 7 und 8 auftreffende Lichtstrahlen benachbarter Spektratbereiche, die nur geringfügig von den Frequenzen ω1 und ω2 abweichen, werden ebenfalls an den Spiegeln 7 und 8 reflektiert. Da sie aber mit einem anderen Einfallswinkel auftreffen, werden sie nicht überlagert.

Die einander überlagerten Lichtstrahlen 4 und 5 durchlaufen anschließend eine Linsenanordnung 9 mit zwei Linsen 9a, 9b, zwischen denen ein nicht lineares Element 10 angeordnet ist. Die Linsen 9a und 9b dienen der Fokussierung der überlagerten Lichtstrahlen 4 und 5. Das nicht lineare Element 10 ist ein Kristall, in dem die Differenzbildung der Frequenzen ω1 und ω2 der beiden Lichtstrahlen 4 und 5 durchgeführt wird. Der Kristall kann beispielsweise ein Lithium-Borat- oder ein Barium-Borat-Kristall (BBO) sein. Ferner ist auch ein PPLN- Kristall (Periodically Poled Lithium-Niobate Crystal) denkbar.

Hinter der Linse 9b tritt nun folglich ein Lichtpuls mit einem Frequenzkamm aus, der offset-frei gebildet ist. Da die Lichtintensität dieses Lichtpulses gering ist, wird der Lichtpuls durch einen Erbium-Verstärker 11 für weitere Anwendungen verstärkt.

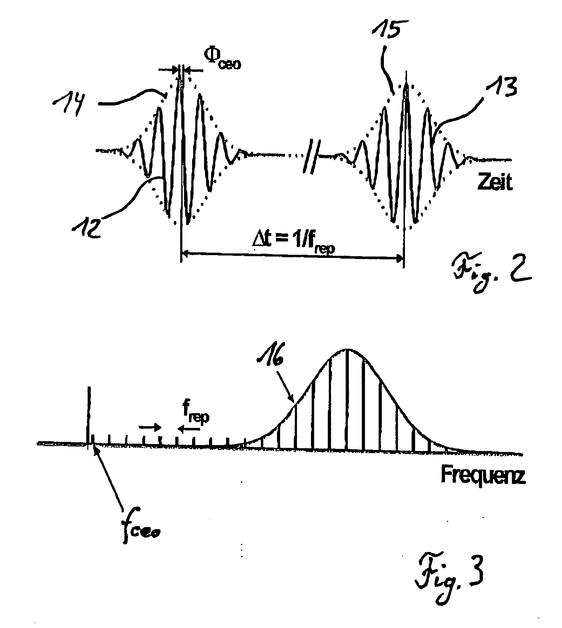

Im Folgenden wird die Funktionsweise der Laseranordnung aus Figur 1 anhand der Figuren 2 bis 5 erläutert. In der Figur 2 sind zwei Lichtpulse 12 und 13 des Erbium-Lasers 1 (aus Figur 1) im Zeitraum dargestellt. Die Lichtpulse 12 und 13 weisen nur einige wenige Lichtzyklen auf. Jeder der Lichtpulse 12 bzw. 13 weist eine Einhüllende 14 bzw. 15 auf. Der Abstand der Maxima der beiden Einhüllenden 14 bzw. 15 der Lichtpulse 12 bzw. 13 beträgt Δt. Aufgrund von Dispersionseigenschaften sind Phasen- und Gruppengeschwindigkeit bei den Lichtpulsen 12 und 13 nicht identisch. Dies kann dazu führen, dass, wie bei dem Lichtpuls 12 gezeigt wird, das Maximum des Lichtpuls 12 von dem Maximum der entsprechenden Einhüllenden 14 um den Betrag

$\phi_{ceo}$ abweicht. Diese Abweichung wird auch als carrier-envelope offset bezeichnet. Im Allgemeinen zeigt $\phi_{ceo}$ eine lineare Zeitabhängigkeit, die die Größe von $f_{ceo}$ bestimmt. Es gilt dabei:

$$f_{ceo} = \frac{1}{2\pi} \cdot \frac{\Delta\Phi_{ceo}}{\Delta t}$$

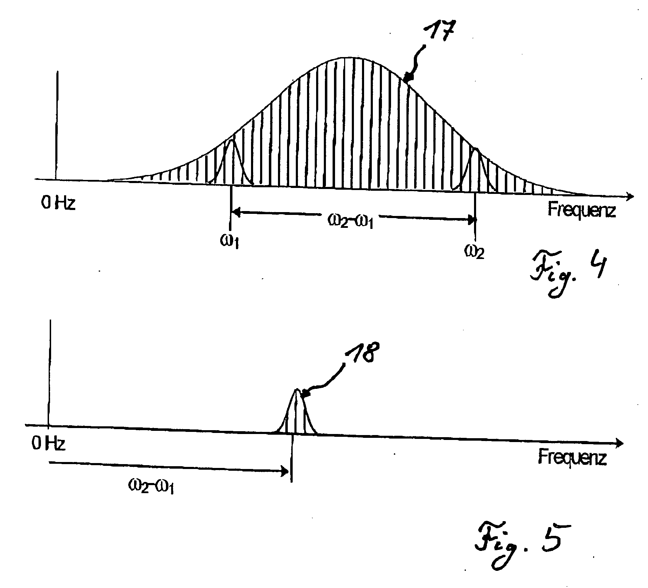

In der Figur 3 ist das Frequenzspektrum der beiden Lichtpulse 12, 13 (Figur 2) im Frequenzraum dargestellt. Die das Frequenzspektrum der Lichtpulse 12, 13 bildenden Frequenzen sind Spektrallinien, die zueinander äquidistant sind, also einen Frequenzkamm 16 bilden. Der Abstand $f_{rep}$ zweier äquidistanter Spektrallinien, auch mit Repititionsrate des Frequenzkamms bezeichnet, entspricht dem reziproken Wert des zeitlichen Abstandes $\Delta t$ der Lichtpulse 12 und 13.

Der in der Figur 2 dargestellte +carrier-envelope offset findet sich in der Figur 3 als Verschiebung des gesamten Frequenzkamms 16, d. h. aller einzelnen Spektrallinien, um den Betrag der Offset-Frequenz $f_{ceo}$ wieder. Der in der Figur 3 gezeigt Frequenzkamm 16 wird in die Mikrostruktur-Faser 2 (aus Figur 1) eingestrahlt. Wie vorstehend bereits genannt, wird das Frequenzspektrum des Superkontinuums, das die Mikrostruktur-Faser 2 anschließend verlässt, verbreitert, d. h. es werden zusätzliche Spektrallinien dem Frequenzspektrum hinzugefügt. Der resultierende Frequenzkamm 17 des Superkontinuums ist in der Figur 4 gezeigt.

Die in der Figur 1 dargestellten Lichtstrahlen 4 bzw. 5 entsprechen jeweils den Frequenzbereichen $\omega 1$ und $\omega 2$ in der Figur 4. Die Frequenzbereiche $\omega 1$ und $\omega 2$ werden voneinander abgezogen. Das Ergebnis dieser Frequenzdifferenzbildung $\omega 2 - \omega 1$ ist in der Figur 5 gezeigt. Wenn der Abstand zwischen den beiden Frequenzen $\omega 1$ und $\omega 2$ mindestens eine Oktave beträgt, d.h. $\omega 2$ ist mindestens doppelt so groß wie $\omega 1$, so liegt die Differenzfrequenz $\omega 2 - \omega 1$ innerhalb des ursprünglichen Frequenzkamms 17 aus Figur 4.

Die Spektrallinien des Frequenzkamms 17 aus der Figur 4 weisen alle noch einen vom Ursprung abweichenden Offset-Betrag $f_{ceo}$ auf. Das Frequenzspektrum des Frequenzkamms 18 in der Figur 5 ist hingegen aus Spektrallinien gebildet, die ein ganzzahliges Vielfaches der Repetitionsfrequenz $f_{rep}$ sind. Der Frequenzkamm 18 ist offset-frei. Die offset-freien Frequenzen können daher als Normal für präzise Messungen verwendet werden.

**Patentansprüche**

1. Verfahren zum Erzeugen eines Frequenzspektrums in Form eines Frequenzkamms, bei dem kurze Lichtpulse erzeugt werden, die jeweils ein aus Spektrallinien entsprechend einer Vielzahl longitudinaler Moden einer Lasereinrichtung zusammengesetztes Frequenzspektrum in Form eines Frequenzkamms mit zueinander äquidistanten Spektrallinien aufweisen, und bei dem eine Frequenzdifferenzbildung derart durchgeführt wird, dass Spektrallinien niedriger Frequenzen von Spektrallinien höherer Frequenzen abgezogen werden, sodass ein Frequenzkamm mit offset-freien Spektrallinien erzeugt wird, deren Frequenzen jeweils einem ganzzahligen Vielfachen der Repetitionsfrequenz des Frequenzkamms entsprechen, **dadurch gekennzeichnet, dass** die Spektrallinien höherer Frequenzen zu den Spektrallinien niedriger Frequenzen einen Frequenzabstand aufweisen, der mindestens einer Oktave entspricht, sodass das Frequenzspektrum des Frequenzkamms mit offset-freien Spektrallinien innerhalb des Frequenzspektrums des Frequenzkamms vor der Frequenzdifferenzbildung liegt.

2. Verfahren nach Anspruch 1, **dadurch gekennzeichnet, dass** die Spektrallinien höherer Frequenzen zu den Spektrallinien niedriger Frequenzen einen Frequenzabstand aufweisen, der im Wesentlichen zwei Oktaven entspricht, sodass das Frequenzspektrum des Frequenzkamms mit offset-freien Spektrallinien in etwa der Mitte des Frequenzspektrums des Frequenzkamms vor der Frequenzdifferenzbildung liegt.

3. Verfahren nach Anspruch 1 oder 2, **dadurch gekennzeichnet, dass** der Frequenzkamm vor der Frequenzdifferenzbildung Frequenzen im Bereich von etwa 100 THz bis 400 THz aufweist.

4. Verfahren nach Anspruch 3, **dadurch gekennzeichnet, dass** der Frequenzkamm vor der Frequenzdifferenzbildung Frequenzen im Bereich von etwa 150 THz bis 350 THz aufweist.

5. Verfahren nach einem der vorstehenden Ansprüche, **dadurch gekennzeichnet, dass** zur Markierung einer einzelnen Spektrallinie die Lasereinrichtung mit einer zusätzlichen Lasereinrichtung gekoppelt wird und die jeweiligen Repetitionsfrequenzen voneinander verschieden sind.

6. Verfahren nach einem der vorstehenden Ansprüche, **dadurch gekennzeichnet, dass** ein Frequenznormal erzeugt wird, um optische Frequenzen und/oder Frequenzdifferenzen zu messen.

7. Verfahren nach einem der vorstehenden Ansprüche, **dadurch** gekenrizeichnet, dass optische Trägerfrequenzen für die Tetekommunikations-Technik erzeugt werden.

8. Verfahren nach einem der Ansprüche 1 bis 6, **da-**

**durch gekennzeichnet, dass** die Frequenzen des optischen, offset-freien Frequenzkamms zu einer mit elektronischen Mitteln zählbaren Messfrequenz umgesetzt werden.

9. Verfahren nach einem der vorstehenden Ansprüche, **dadurch gekennzeichnet, dass** die offset-freien Frequenzen in einer Glasfaser übertragen werden.

10. Verfahren nach Anspruch 9, **dadurch gekennzeichnet, dass** eine zu übertragene Information den offset-freien Frequenzen über Amplituden-Modulation aufgeprägt wird.

11. Lasereinrichtung zur Durchführung des Verfahrens gemäß einem der vorstehenden Ansprüche mit:

    - Mittel zum Erzeugen eines aus Spektrallinien entsprechend einer Vielzahl longitudinaler Moden der Lasereinrichtung zusammengesetztes Frequenzspektrums in Form eines Frequenzkamms mit zueinander äquidistanten Spektrallinien,
    - Mittel (3) zum Aufteilen des Frequenzspektrums des Frequenzkamms in zumindest zwei Frequenzbereiche unterschiedlicher Frequenzen ($\omega 1$, $\omega 2$), die zueinander einen bestimmten Frequenzabstand aufweisen,
    - einem nicht-linearen Element (10) für eine Frequenzdifferenzbildung, in das Lichtstrahlen (4, 5) mit den entsprechenden Frequenzbereichen ($\omega 1$, $\omega 2$) überlagert eingestrahlt werden, sodass ein Frequenzkamm mit offset-freien Spektrallinien erzeugt wird, deren Frequenzen jeweils einem ganzzahligen Vielfachen der Repetitionsfrequenz des Frequenzkamms entsprechen und das Frequenzspektrum des Frequenzkamms mit offset-freien Spektrallinien innerhalb des Frequenzspektrums des Frequenzkamms vor der Frequenzdifferenzbildung liegt.

12. Lasereinrichtung nach Anspruch 11, **dadurch gekennzeichnet, dass** die Mittel zum Erzeugen des Frequenzkamms einen modengekoppelter Erbium-Faserlaser (1) aufweisen, der kurze Lichtpulse erzeugt.

13. Lasereinrichtung nach Anspruch 11 oder 12, **dadurch gekennzeichnet, dass** die Mittel zum Erzeugen des Frequenzkamms eine zwischen dem Laser (1) und dem Mittel (3) zum Aufteilen des Frequenzspektrums angeordnete optisch-nichtlineare Faser aufweisen, die einen verbreiterten Frequenzkamm (17) erzeugt.

14. Lasereinrichtung nach einem der Ansprüche 11 bis 13, **dadurch gekennzeichnet, dass** das Mittel (3) zum Aufteilen des Frequenzspektrums ein Beugungsgitter ist.

15. Lasereinrichtung nach einem der Ansprüche 11 bis 14, **dadurch gekennzeichnet, dass** eine Spiegelanordnung mehrerer Spiegel (7, 8) zwischen dem Mittel (3) zum Aufteilen des Frequenzspektrums und dem nicht-linearen Element (10) vorgesehen ist, um die Lichtstrahlen (4, 5) zu überlagern.

16. Lasereinrichtung nach Anspruch 15, **dadurch gekennzeichnet, dass** zwischen dem Mittel (3) zum Aufteilen des Frequenzspektrums und dem Spiegel (8) zwei gegeneinander verschiebbare Prismen (6) vorgesehen sind, durch die der Lichtstrahl (4) mit niedrigerer Frequenz ($\omega 1$) durchläuft.

17. Lasereinrichtung nach einem der Ansprüche 11 bis 16, **dadurch gekennzeichnet, dass** eine Linsenanordnung (9) vorgesehen ist, die die überlagerten Lichtstrahlen (4, 5) fokussiert.

18. Lasereinrichtung nach einem der Ansprüche 11 bis 17, **dadurch gekennzeichnet, dass** ein Erbium-Verstärker (11) vorgesehen ist, der den Frequenzkamm (18) verstärkt.

19. Verwendung einer Lasereinrichtung gemäß einem der Ansprüche 11 bis 18 zur Erzeugung eines Frequenznormals, um optische Frequenzen und/oder Frequenzdifferenzen zu messen.

20. Verwendung einer Lasereinrichtung gemäß einem der Ansprüche 11 bis 18 zur Erzeugung optischer Trägerfrequenzen für die Telekommunikations-Technik.

21. Verwendung nach einem der Ansprüche 19 oder 20, **dadurch gekennzeichnet**, die offset-freien Frequenzen in einer Glasfaser übertragen werden.

22. Verwendung nach Anspruch 21, **dadurch gekennzeichnet, dass** eine zu übertragene Information den offset-freien Frequenzen über Amplituden-Modulation aufgeprägt wird.

Fig. 1

$\Phi_{ceo}$

14

15

13

12

Zeit

$\Delta t = 1/f_{rep}$

*Fig. 2*

16

$f_{rep}$

Frequenz

$f_{ceo}$

*Fig. 3*

EP 1 594 020 A1

17

0 Hz

$\omega_2 - \omega_1$

$\omega_1$ $\omega_2$

Frequenz

Fig. 4

18

0 Hz

Frequenz

$\omega_2 - \omega_1$

Fig. 5

EP 1 594 020 A1

**Europäisches Patentamt**

# EUROPÄISCHER RECHERCHENBERICHT

Nummer der Anmeldung

EP 05 00 9406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | ZIMMERMANN M ET AL: "Optical clockwork with an offset-free difference-frequency comb: accuracy of sum- and difference-frequency generation" OPTICS LETTERS OPT. SOC. AMERICA USA, Bd. 29, Nr. 3, 1. Februar 2004 (2004-02-01), Seiten 310-312, XP002336000 ISSN: 0146-9592 | 1,3-11, 13-22 | G04F5/14 G02F1/35 |
| Y | * Seite 310 - Seite 311, linke Spalte; Abbildung 1; Tabelle 1 * ----- | 12 | |
| Y | HUNDERTMARK H ET AL: "Phase-locked carrier-envelope-offset frequency at 1560 nm" OPTICS EXPRESS OPT. SOC. AMERICA USA, Bd. 12, Nr. 5, 8. März 2004 (2004-03-08), XP002336001 ISSN: 1094-4087 * Abschnitt 1 * ----- | 12 | |

| RECHERCHIERTE SACHGEBIETE (Int.Cl.7) |
|---|
| G04F G02F |

Der vorliegende Recherchenbericht wurde für alle Patentansprüche erstellt

| Recherchenort | Abschlußdatum der Recherche | Prüfer |
|---|---|---|
| München | 14. Juli 2005 | Frank, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

11